# EUROPEAN PATENT APPLICATION

(11) **EP 0 917 301 A2**
(43) Date of publication of application: **19.05.1999**
(21) Application number: 98309086.1
(22) Date of filing: 05.11.1998
(51) Int. Cl.: H04B 3/54

(54) **Transmission of communications over electricity distribution networks**

(30) Priority: 11.11.1997 GB 9723715
(71) Applicant: MARCONI COMMUNICATIONS LIMITED, Coventry, CV3 1HJ (GB)
(72) Inventor: Winch, Nicholas Richard, Styvechale, Coventry CV3 6FW (GB); Phillpot, Graham Bentley, Longeaton, Nottingham NG10 2ET (GB)
(74) Representative: Branfield, Henry Anthony

(57) **Abstract**

In an electricity distribution and/or power transmission network having one or more nodes at which nodes connection is made between sections of the network, there is input means at a node for coupling on to the network a telecommunication signal carried on a carrier frequency and output means at the node for removing a telecommunication signal from the network, the input and/or the output means being in the form of an add/drop multiplexer, which add/drop multiplexer provides a means of connecting telecommunication signals across the node.

## Description

Transmission of voice and data communications services over electricity distribution networks has been demonstrated in various trials over the past few years. Such demonstrations have been largely confined to the 'low voltage' electricity distribution network, although low rate signals have been carried over longer range, higher voltage transmission lines.

Low voltage distribution networks are limited to a range of typically 250 metres from a secondary transformer, or substation site, but telecommunications services need to be delivered from further afield. This necessitates the provision of some other means of data transmission, such as fibre optics or microwave radio, from a telecommunications network node to each substation site. The use of the low voltage distribution network does not therefore guarantee a low cost telecommunications network.

Such an arrangement is described in Patent Application No. WO 94/09572 imported by reference, wherein a power transmission network is disclosed which includes input means for the input of telecommunication signals having carrier frequencies greater than 1MHz on to the network, and a means for removing similar speech and/or data signals from the network. Preferably a network conditioning element is used which includes a low pass filter portion for filtering out a low frequency high amplitude mains power signal, and a coupling element for input and/or removal of telecommunication signals from the network. In this way both speech and data signals can be transmitted at carrier frequencies of greater than 1MHz along a standard electricity distribution and/or transmission network.

A more cost effective telecommunications network would be realisable if the next layer of the electricity supply network, from primary transformer site to secondary transformer sites, could also be utilised for high data rate transmission.

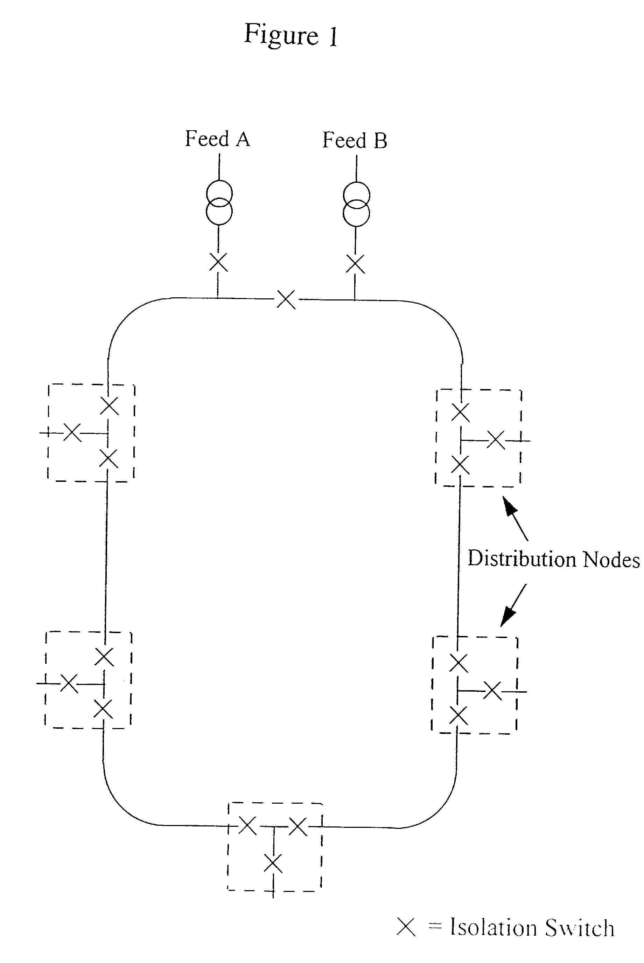

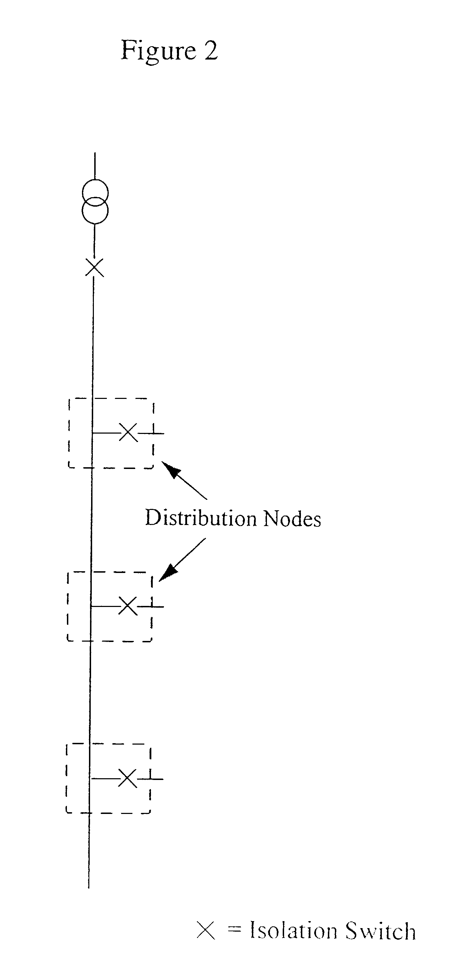

There are many problems associated with the utilisation of higher layers of the electricity distribution network, e.g. the 11kV or 33kV networks, for transmission of high data rate communications signals. The following, are some of the problems that have been identified.
1. The high signal attenuation experienced by high frequency communications signals, which is manageable over 250 metres of the low voltage network, becomes a severe limitation over the longer distances involved in the higher network layers, whose distance is typically several kilometres.
2. The structure of the network from primary to secondary transformers is frequently in the form of a ring, as shown in figure 1, but may be in the form of a tree and branch, as shown in figure 2. In the case of a ring, nodes may be fed from either direction and any section may be isolated for maintenance or repair work. The ring may thus have a moveable open point, hence the length and route of the communications path may be variable.
3. Interconnection of a high frequency communication signal to a higher voltage electricity cable is liable to be expensive. Any connection point on such cables not only has to withstand the high voltages involved, but also must have the physical integrity to withstand the effects of very high fault currents.
4. In cases where the communications signal is destined for, or originated from, users connected to the low voltage network, the substation or secondary transformer presents an inductive block to the high frequency signals.

According to the present invention there is provided an electricity distribution and/or power transmission network having one or more nodes whereat connection is made between sections of the network, including input means at a node for coupling on to the network a telecommunication signal having a carrier frequency and output means at the node for removing a telecommunication signal from the network, the input and/or the output means comprising an add/drop multiplexer, which provides a connection for telecommunication signals across the node.

The present invention will now be described, by way of example, with reference to the accompanying drawings, in which:
Figure 1 shows an example of an electricity distribution ring;
Figure 2 shows an example of an electricity distribution branch;
Figure 3 shows communication transmission along adjacent sections of an electricity distribution network, with data add/drop at an intermediate node using separate frequency bands each carrying duplex transmission;
Figure 4 shows a similar arrangement to Figure 3, with separate frequency bands each carrying simplex transmission;
Figure 5 shows a similar arrangement to Figure 3 without data add/drop at an intermediate node;
Figure 6 shows communication transmission round an electricity distribution ring, including frequency re-use, and duplex transmission within each frequency band;
Figure 7 shows a similar arrangement to Figure 6 with simplex transmission within each frequency band;
Figure 8 shows a detailed arrangement for data transmission round an 11kv electricity distribution ring;
Figure 9 shows the arrangement of Figure 8 extended to provide data transmission to low voltage users; and
Figure 10 shows an arrangement similar to Figure 9 where distribution is along an 11kv electricity distribution ring.

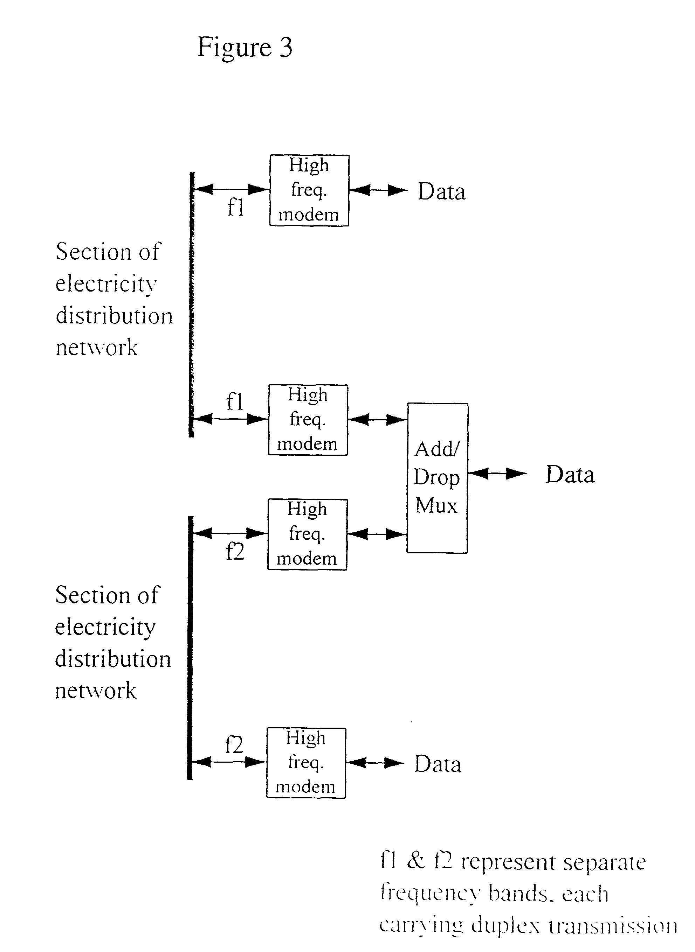

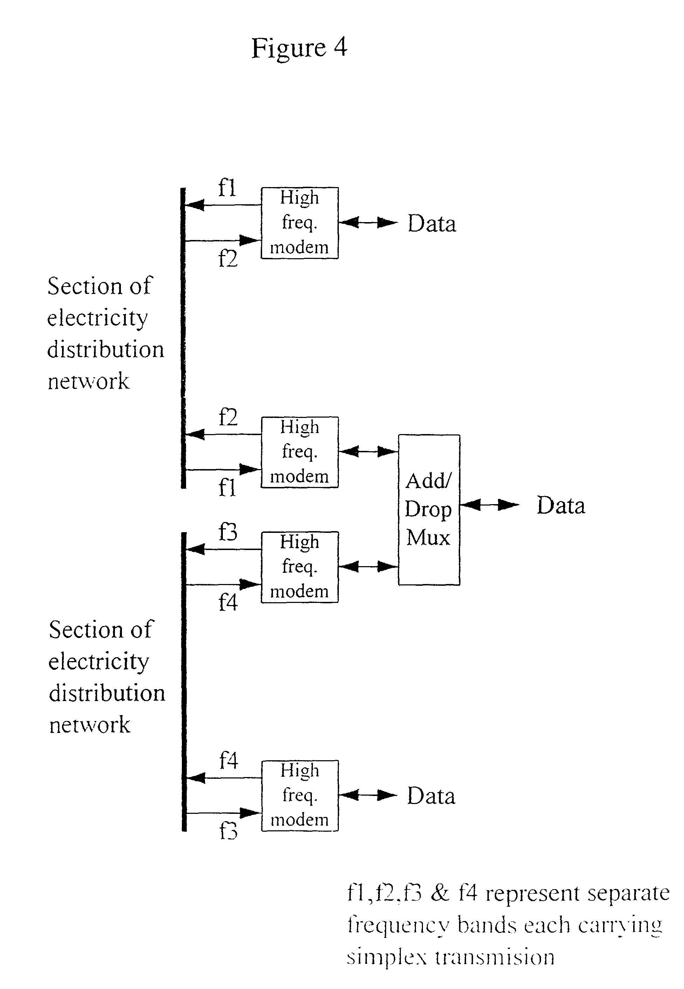

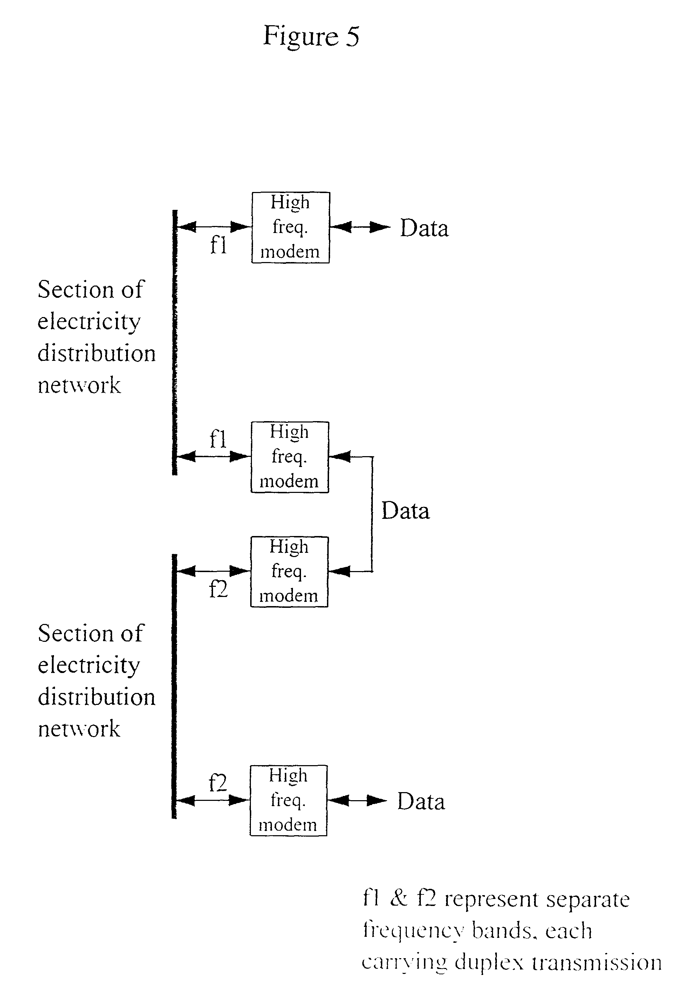

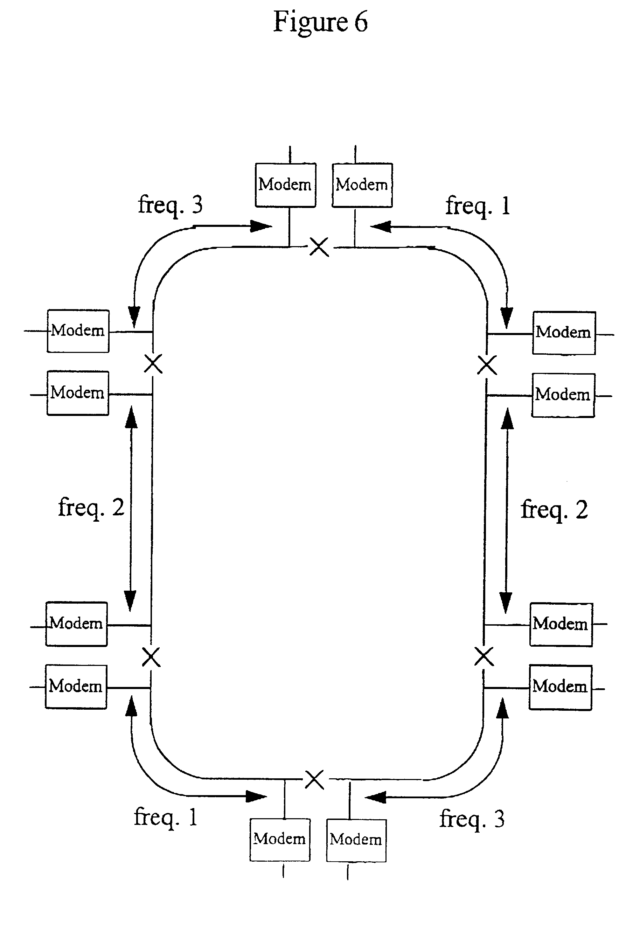

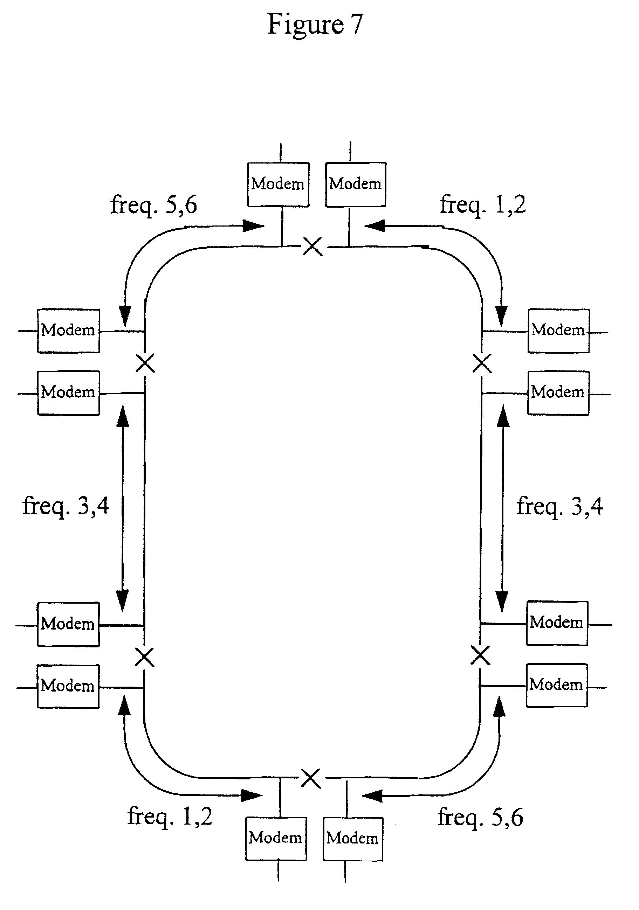

The basis of the proposed transmission scheme is shown in figure 3. It has the following features:
1. Each section of the electrical distribution network, i.e. the cable between adjacent isolation points, is treated as a separate high frequency communication path. This confers two immediate benefits: firstly, high frequency communication is restricted to much shorter distances, and secondly, the status of the electricity supply isolation switching between adjacent sections does not affect the data communications path.
2. Different communications frequency bands are used on adjacent sections of the network in order that the signals on adjacent sections do not interfere with each other. In the variant shown in figure 3, duplex transmission, e.g. time division duplexing, is assumed within each frequency band.
   In the alternative variant shown in figure 4, a separate frequency band is used for each direction of transmission. This is frequency division duplexing and thus requires two simplex frequency bands for each transmission section, but for a given data rate and modulation method, these bands may be narrower, resulting in similar spectral efficiency.
   The high attenuation presented by the electricity distribution cables to high frequency signals will normally ensure that frequency bands can be re-utilised as often as every third section. Examples of frequency re-use are shown in figures 6 and 7. In circumstances, e.g. shorter section lengths, where attenuation is less severe, less frequent frequency re-use may be necessary, but in these circumstances, a wider range of useable frequencies will normally be available.
3. Data received by the modem at the end of one transmission section is passed to the modem on the adjacent transmission section via an 'Add/Drop Multiplexing' function. This inserts or removes any data components to be collected from or delivered to the local node. All other data is repeated along the communications network.
   Examples of add/drop multiplexers (add/drop mux) may be found in, for example Patents Nos. US 4,468,767; US 5,018,135; US 5,283,785 and US 5,287,513.
4. Interconnection of the high frequency communications signals to electricity cables is made at existing nodes in the electricity network, where cables are already brought above ground and broken out into separate conductors for termination on to switching or other equipment. At these nodes, it is existing practice to employ devices such as current transformers in order to interface to individual conductors, for purposes such as fault monitoring and 3-phase metering and these may provide suitable means to connect the signals to the cables.
5. Modems at each end of an individual network section communicate in simple 'point to point' mode, even though the overall communications network functions as 'point to multi-point' or 'multi-point to multi-point'.
6. At nodes where a data interface is not required, modems on adjacent sections may be connected back to back, as shown in figure 5, to provide simple repetition of data along the communications network.
7. In either case at a node signal regeneration is provided by the add/drop multiplexer or modem.

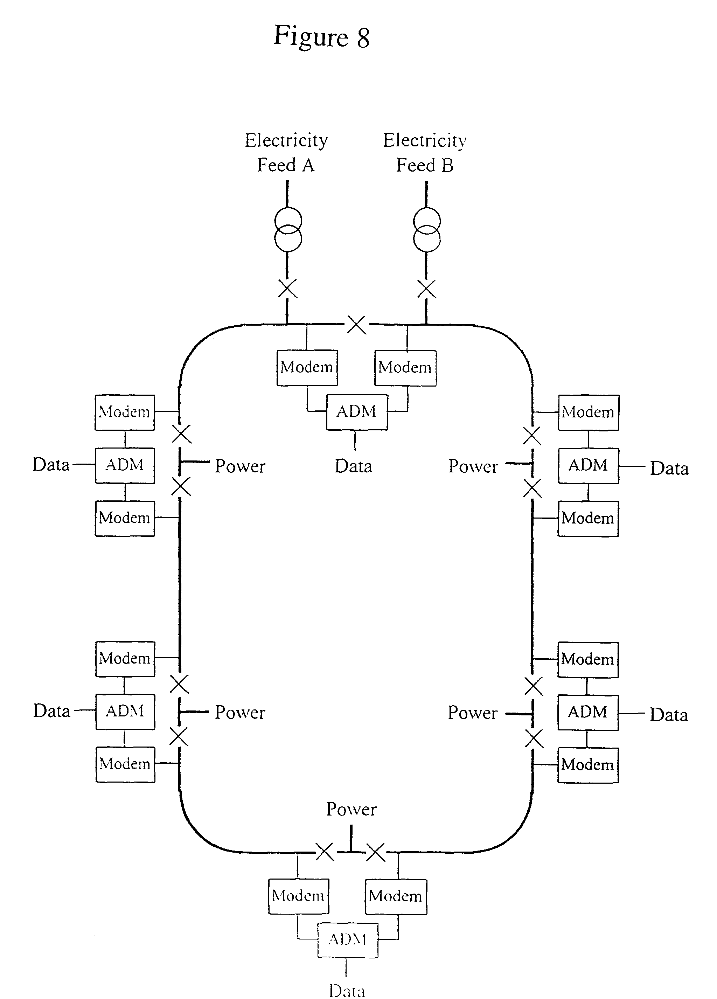

   Figure 8 shows a generic data communications network based on the proposed transmission scheme as applied to an electricity distribution ring network. This communications network allows 'any to any' logical connections. It is not only independent of the electricity isolation switching, but is also unaffected by the loss of any one transmission section, due to the ability to transmit in both directions around the ring.

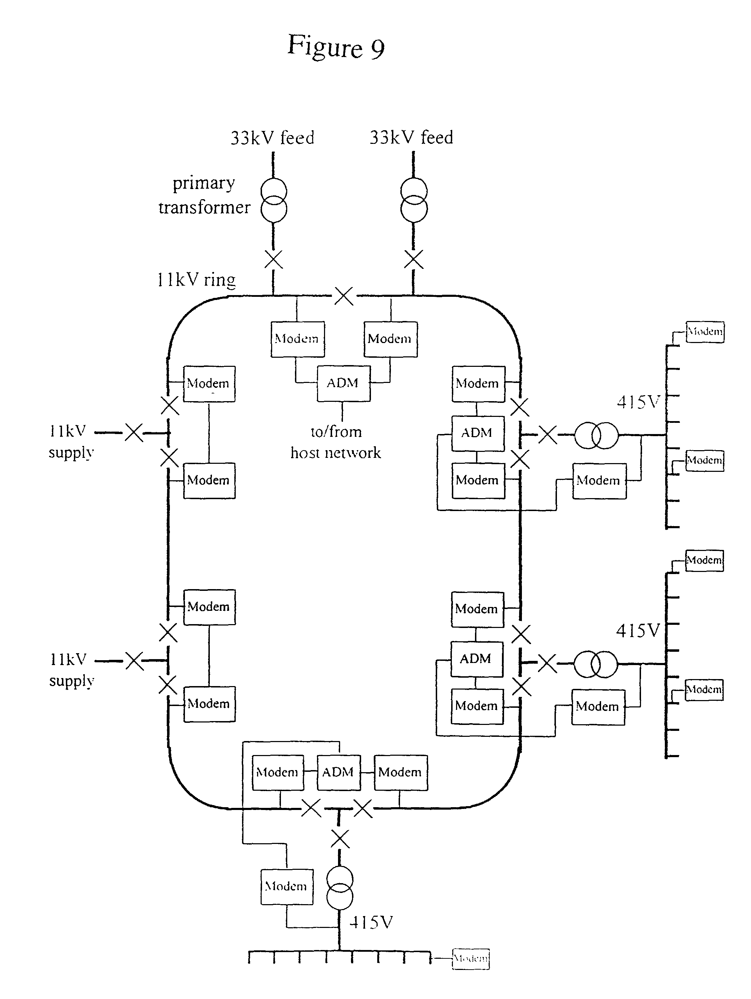

   Figure 9 shows a more specific example of a communications network extending from a primary transformer site down to individual low voltage customer premises. The proposed transmission scheme provides a bi-directional data connection to secondary modems at each secondary transformer site. The secondary modem regenerates and connects a communications signal on to the low voltage distribution cable, and hence to individual customer premises.

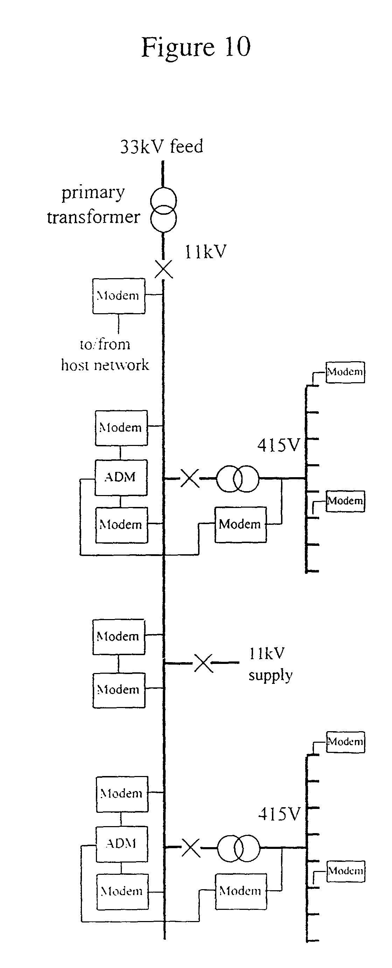

   Figure 10 is the equivalent to figure 9 but as applied to a electricity distribution branch.
   Connection between a modem and the electricity cable obviously requires isolation from the electricity supply. This could be provided for example by capacitive coupling or by use of a fibre optic link.
   The description has referred to specific electrical voltages, but it is not intended that these voltages should in any way be considered as limiting the invention.

## Claims

1. An electricity distribution and/or power transmission network having one or more nodes whereat connection is made between sections of the network, including input means at a node for coupling on to the network a telecommunication signal having a carrier frequency and output means at the node for removing a telecommunication signal from the network, the input and/or the output means comprising an add/drop multiplexer, which provides a connection for telecommunication signals across the node.

2. A network as claimed in Claim 1, wherein the input means and output means each comprise a modem.

3. A network as claimed in Claim 1 or 2, wherein where at a node input means and output means are not required a connection means between sections of the network comprises modems.

4. A network as claimed in Claim 1, 2 or 3, wherein adjacent sections of the network include input means and output means operating with different carrier frequencies for each of the adjacent sections.

5. A network as claimed in any preceding claim, wherein where the network includes a low voltage spur for one or more customers, a modem for connecting the telecommunication signal to or from the network is included.

6. A network as claimed in any preceding claim, wherein the add/drop multiplexer comprises signal regeneration means.

7. A network as claimed in Claim 2 or any claim appendant thereto,, wherein the modem comprises signal regeneration means.
